# EUROPÄISCHE PATENTSCHRIFT

(11) **EP 0 361 344 B1**
(45) Veröffentlichungstag und Bekanntmachung des Hinweises auf die Patenterteilung: **15.12.1993**
(21) Anmeldenummer: 89117627.3
(22) Anmeldetag: 24.09.1989
(51) Int. Cl.: F16L 55/10, F16L 41/16

(54) **Vorrichtung für das Setzen eines Stopfens auf ein unter Betriebsdruck stehendes Rohr einer Versorgungsleitung**
Apparatus for applying a plug to a distribution pipe under pressure
Appareil pour placer un bouchon sur une conduite d'alimentation sous pression

(30) Priorität: 26.09.1988 DE 3832603
(43) Veröffentlichungstag der Anmeldung: 04.04.1990
(73) Patentinhaber: Jeschke, Immanuel, D-31157 Sarstedt (DE)
(72) Erfinder: Jeschke, Immanuel, D-31157 Sarstedt (DE)
(74) Vertreter: Junius, Walther, Dr.

(56) Entgegenhaltungen:
- DE-U- 8 814 193
- GB-A- 282 949
- GB-A- 1 263 053
- US-A- 2 911 859
- US-A- 3 893 487

## Beschreibung

Die Erfindung betrifft eine Vorrichtung für das Verschließen eines unter Betriebsdruck stehenden Rohres einer Versorgungsleitung, bestehend aus einem mit einer axialen Gewindebohrung versehenen Stopfen und einem Stopfensetzgerät, das aus einer am Rohransatz einer Rohrschelle, die abgedichtet um das Rohr der Versorgungsleitung gelegt ist, anzubringenden, mit einem Absperrschieber und einem Schleusenrohr versehenen Schleuse und einer im Schleusenrohr abgedichtet verschiebbaren Stange aufgebaut ist, deren der Versorgungsleitung zugewandtes Ende mit einem Gewinde zur Halterung des Stopfens und deren aus dem Schleusenrohr herausragendes Ende mit einem Drehwerkzeug versehen ist, wobei die Stange von einer Hohlwelle umgeben ist, welche an den Stopfen ankoppelbar ist und welche an ihrem aus dem Schleusenrohr herausragenden Ende mit einem Drehwerkzeug zu drehen ist.

Eine derartige Vorrichtung ist aus den GB 1 263 053 A1 und GB 282 949 A1 bekannt geworden. Sie kommt bei Reparaturarbeiten an unter Druck stehenden Gasleitungen zum Einsatz, um ein Loch für die Einführung einer Abdichtblase in die unter Druck stehende Gasleitung einzuschneiden und um am Ende des Reparaturvorganges nach dem Herausnehmen der Abdichtblase das Loch durch einen Stopfen zu verschließen. Weder beim Einbringen noch beim Herausnehmen der Abdichtblase noch beim Einsetzen des Stopfens darf Gas austreten. Daher finden diese Arbeiten in einer auf die zu reparierende Leitung aufgesetzten Schleuse statt, in die man wahrend der Arbeit nicht hineinschauen kann. Um den Stopfen sicher an der Stange drehfest zu befestigen, ist die an ihrem Ende mit einem Gewinde versehene Stange von einer Hohlwelle umgeben, die an ihrem unteren Ende einen Vierkant trägt, der in ein Vierkantloch im Stopfen eingreift, an dessen Grund sich ein Gewindeloch anschließt, in das das mit Gewinde versehene Ende der Stange eingeschraubt ist.

Diese Ausführungsform macht es erforderlich, dem Stopfen eine Länge zu geben, die größer als die Summe der Tiefen des Vierkantloches und des Gewindeloches ist. Die entstehende erhebliche Baulänge des Stopfens ist aus mehreren Gründen unvorteilhaft. Darüber hinaus ist aber auch die Handhabung unvorteilhaft, wenn der bereits eingeschraubte Stopfen wieder entfernt werden soll. Denn dann ist in das Stopfenloch sowohl das Gewinde als auch der Vierkant einzuführen, ohne daß man das Einführen beobachten könnte, denn der Vorgang findet innerhalb der Schleuse statt, in die man nicht hineinschauen kann, und ohne daß man die Stange und die sie umgebende Hohlwelle radial bewegen könnte, weil beide in der Schleuse abgedichtet geführt sind.

Die Erfindung vermeidet die Nachteile des Standes der Technik. Es ist die Aufgabe der Erfindung, eine sehr einfach aufgebaute und leicht zu handhabende Stopfensetzvorrichtung zu schaffen, bei der der Stopfen besonders leicht an der Stange zu befestigen und wieder von der Stange zu lösen ist.

Die Erfindung besteht darin, daß die Hohlwelle mit einem Innengewinde versehen ist, welches in ein auf der Stange befindliches Außengewinde eingeschraubt ist, und daß die Hohlwelle mit ihrer Stirnseite am Bohrwerkzeug oder Stopfen anliegt.

Mit dieser Hohlwelle läßt sich das Werkzeug und auch der Stopfen bei Verwendung einer Gewindeverbindung kontern. Das erleichtert das Anbringen des Werkzeuges bzw. des Stopfens an der Stange außerordentlich. Die Befestigung wird dadurch mit einfachen Mitteln außerordentlich fest und ebenso leicht wieder lösbar. Die Handhabung des Stopfensetzgerätes wird dadurch wesentlich erleichtert, die Arbeitszeit wird kürzer.

Zweckmäßig ist es, wenn mindestens ein Dichtungsring zwischen Stange und Hohlwelle einerseits und zwischen Hohlwelle und Schleusenrohr andererseits angeordnet ist. Auf diese Weise läßt sich jeder Gasaustritt während des Einsetzens des Stopfens sicher vermeiden.

Damit die Teile dieses Stopfensetzgerätes fest ineinandersitzen und nicht von Druck in der Versorgungsleitung auseinander getrieben werden können, ist es zweckmäßig, wenn die Hohlwelle an ihrer Außenseite innerhalb des Schleusenrohres mit einem Anschlag vorzugsweise in Form eines Federringes und das Schleusenrohr mit einem Gegenanschlag versehen ist. Gleichfalls ist es aus diesem Grunde zweckmäßig, wenn die Stange mit einem Anschalg, vorzugsweise in Form eines Bundringes, und die Hohlwelle mit einem Gegenanschlag versehen ist.

Zur Gasdichtheitsprüfung ist es vorteilhaft, wenn das Schleusenrohr mit einem durch ein Ventil verschlossenen Kanal versehen ist.

Damit dieses aus der Stirnseite des Schleusenrohres hervorstehende Ventil nicht dem Drehen der Hohlwelle im Wege ist, ist es zweckmäßig, wenn die Hohlwelle auf ihrem aus dem Schleusenrohr herausstehenden Ende mit einem weiteren Anschlag, vorzugsweise in Form eines Federringes, versehen ist, der gewährleistet, daß das Drehwerkzeug am äußeren Ende der Hohlwelle eine genügende Entfernung von dem Ventil hat.

Baulich wird die Vorrichtung besonders einfach, wenn die Stange vorzugsweise an ihrem im Schleusenrohr befindlichen Ende einen bundartigen Vorsprung aufweist, der das Außengewinde trägt, in das das Innengewinde der Hohlwelle einschraubbar ist. Zweckmäßigerweise ist dieser bundartige Vorsprung gleichzeitig der Anschlag, der ein Herausdrücken der Stange durch den Gasdruck der Versorgungsleitung verhindert.

Die Arbeit mit diesem Stopfensetzgerät wird wesentlich erleichtert, wenn der Stopfen ein Schneidgewinde trägt. Damit entfällt der bisher notwendige gesonderte Arbeitsgang des Gewindeschneidens, dieser Arbeitsgang wird nun gleichzeitig mit dem Eindrehen des Stopfens ausgeführt.

Dabei ist es für die Beseitigung der Späne von besonderem Vorteil, wenn das Schneidgewinde an durch schräg auf der Umfangsfläche des Stopfens angeordnete Ausnehmungen unterbrochen ist. Diese ist insbesondere beim Schneiden eines Gewindes in das Kunststoffmaterial PVC von Wichtigkeit, welches bei in die Gewindegänge hineingedrängten Schnittspänen platzen würde.

Hierbei ist es für das Tragen des Gewindes von besonderem Vorteil, wenn jeweils die Stirnfläche eines tiefer liegenden Gewindezahnes in Drehrichtung vor dem nächst höheren Gewindezahn liegt.

Zweckmäßigerweise wird der Stopfen oberhalb des Gewindes mit einer Dichtung, vorzugsweise einem Flachdichtungsring oder einem O-Ring, versehen. Für das gute und sichere Einbringen des Gewindes ist es von Vorteil, wenn das Gewinde des Stopfens ein mehrgängiges Gewinde ist.

Das Wesen der vorliegenden Erfindung ist nachstehend anhand von in der Zeichnung schematisch dargestellten Ausführungsbeispielen näher erläutert. Es zeigen:
- Fig. 1: einen Querschnitt durch eine Anbohrvorrichtung mit einer mit Gewinde versehenen Hohlwelle,
- Fig. 2: einen Querschnitt durch eine Anbohrvorrichtung mit einer mit Vorsprüngen versehenen Hohlwelle.

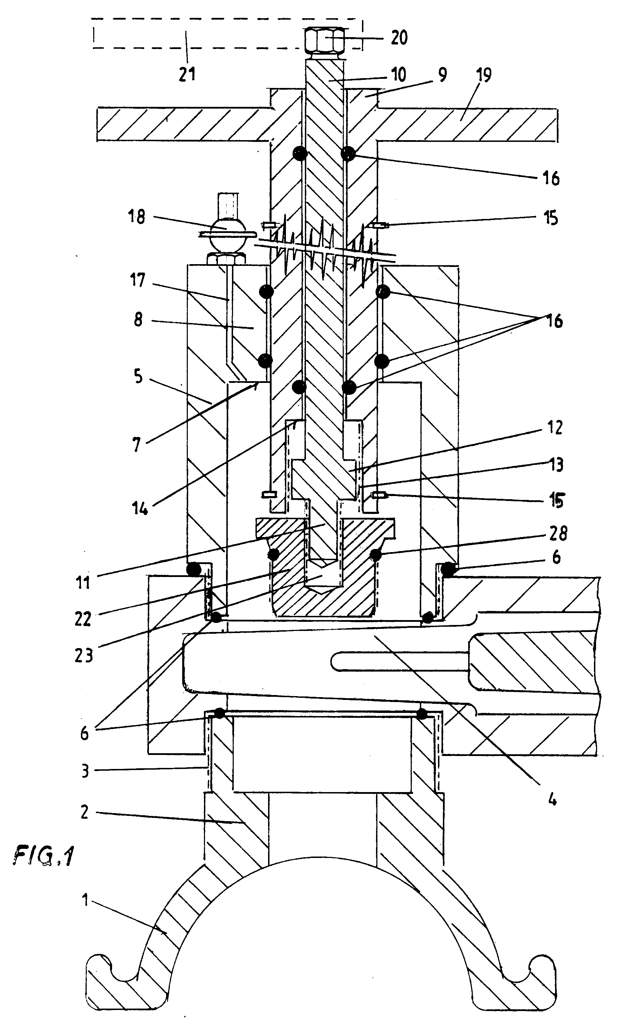

An dem nicht dargestellten Versorgungsrohr wurde die in der Zeichnung nur mit ihrer einen Hälfte gezeigte Anbohrschelle 1 angebracht, mit deren Hilfe die Anbohrung, die hier nicht interessiert, durchgeführt wurde. Die Anbohrschelle 1 trägt einen Rohransatz 2, der ein Außengewinde 3 aufweist, auf das der nur teilweise dargestellte Absperrschieber 4 mit seinem einen Anschluß aufgeschraubt wird, während auf den anderen Anschluß das Schleusenrohr 5 aufgeschraubt wird. Dichtungen 6 sorgen für eine flüssigkeits- und gasdichte Verbindung dieser Teile miteinander. Das Schleusenrohr 5 weist einen Querschnittssprung 7 auf, in den verengten Teil 8 ist zentrisch ein die Hohlwelle 9 bildendes Rohr und die Stange 10 eingesetzt. Die Stange 10 weist an ihrem der Versorgungsleitung zugewandten Ende einen Gewindezapfen 11 auf, der einstückig mit der Stange 10 hergestellt ist. Oberhalb dieses Gewindezapfens 11 weist die Stange 10 einen Bundring 12 auf, dessen Außengewinde 13 in ein in die Hohlwelle 9 eingeschnittenes Innengewinde eingreift. Der mit Innengewinde versehene Teil 9A der Hohlwelle 9 ist länger als der Bundring 12. Zwischen dem Teil 9B mit glatter Innenoberfläche der Hohlwelle 9 und dem Gewindeteil 9A befindet sich ein Absatz 14, welcher als Gegenanschlag für den als Anschlag dienenden Bundring 12 dient. Dieser Gegenanschlag verhindert, daß durch Gasdruck die Stange 10 aus der Hohlwelle 9 herausgepreßt werden kann.

Die Hohlwelle 9 weist an ihrem unteren Ende eine Nut auf, in die ein Federring 15 eingesetzt ist, der als Anschlag gegen ein Herausschieben der Hohlwelle 9 aus dem Schleusenrohr durch Gasdruck dient. Der Gegenanschlag für diesen Federring 15 wird durch den Absatz 7 des Schleusenrohres gebildet.

In eine in die Innenwandung der Hohlwelle 9 eingebrachte Nut ist ein Dichtring 16 eingelegt, welcher eine Abdichtung zwischen der Stange 10 und der Hohlwelle 9 vornimmt. In die Innenwandung des verengten Teiles 8 des Schleusenrohres 5 sind zwei weitere Nuten eingebracht, die weitere Dichtungsringe 16 aufnehmen, welche eine Abdichtung zwischen dem Schleusenrohr 5 und der Hohlwelle 9 bewirken.

In den verengten Teil 8 des Schleusenrohres 5 ist ein Kanal 17 eingebracht, der durch ein Ventil 18 verschlossen ist. Damit das am Ende der Hohlwelle 9 angebrachte Drehwerkzeug 19 nicht mit dem Ventil 18 in Berührung kommen kann, ist am oberen Ende der Hohlwelle 9 ein weiterer Federring 15 in eine hierfür vorgesehene Nut eingesetzt, der als Anschlag dient, während die nach oben gerichtete Stirnseite des Schleusenrohres 5 als Gegenanschlag dient.

Am oberen Ende der Stange 10 ist ein Drehwerkzeug, z.B. in Form eines Sechskantes 20 angebracht, auf welches z.B. ein Ring-Schraubenschlüssel 21 gesetzt wird. Auch das obere Ende der Hohlwelle 9 ist mit einem Drehwerkzeug versehen, hier in Form einer Querstange 19, an der mit der Hand angefaßt wird und die Hohlwelle 9 gedreht wird.

Der Gewindezapfen 11 wird in das Gewindeloch 23 des Stopfens 22 eingeschraubt. Die Hohlwelle 9 ist durch Relativverdrehung gegenüber der Stange 10 mit ihrer Stirnseite gegen den Stopfen 22 gedrückt. Hierdurch ist eine Konterung erhalten, die Stange 10, die Hohlwelle 9 und der Stopfen 22 sind dadurch zu einer festen Einheit zusammengeschraubt und gekontert.

Der Stopfen 22 weist ein Schneidgewinde 24 auf, welches durch schräg auf der Umfangsfläche des Stopfens 22 angeordnete Ausnehmungen 25 unterbrochen ist, die der Abfuhr von Spänen dienen. Die schräge Anordnung dieser Ausnehmungen 25 ist erfolgt, damit jeweils die Stirnfläche eines tiefer liegenden Gewindezahnes in Drehrichtung vor dem nächst höheren Gewindezahn liegt und hierdurch eine besonders gute Tragfähigkeit des Gewindes und somit ein besonders fester Sitz des Stopfens erreicht wird.

In dem gezeichneten Ausführungsbeispiel weist die Rohrschelle 1 am Rohransatz 2 ein Außengewinde auf. Der Rohransatz kann auch mit Innengewinde versehen sein, dann wird die aus Absperrschieber 4 und Schleusenrohr 5 bestehende Schleuse am Ankopplungsort mit Außengewinde versehen, was in einer einfachen Ausführung durch Einsetzen eines Nippels erfolgen kann. Der Rohransatz kann auch mit einem Flansch versehen sein, in diesem Fall wird auch die Schleuse mit einem Flansch versehen.

Die gleiche Möglichkeit der Ankopplung ist bei dem in nahezu gleicher Weise mit Schleuse und Stange aufgebauten Anbohrgerät für die Ankopplung des Bohrwerkzeuges gegeben.

Das Schneidgewinde kann auch achsparallel auf der Umfangsfläche des Stopfens angeordnet sein. Ohne derartige achsparallel oder schräg angeordnete Ausnehmungen lassen sich die beim Schneiden entstandenen Späne oftmals nicht einwandfrei abführen.

Zweckmäßigerweise wird der Stopfen sowohl mit einer Ausnehmung für die Aufnahme eines Dichtringes, vorzugsweise eines O-Ringes, anschließend mit einem Dichtkonus und anschließend mit einem Flansch versehen. Auf diese Weise kann der Stopfen universell eingesetzt werden: Bei dem Einschrauben in härtere Materialien verwendet man zur Abdichtung den O-Ring, beim Einschrauben in weichere Materialien entfernt man den O-Ring und dichtet mit Hilfe des Dichtkonus ab, wobei der Flansch lediglich als Anschlag dient. Man kann aber auch einen Dichtring in Form einer Ringscheibe an den Flansch anlegen und mit Hilfe dieser Dichtung abdichten. Auf diese Weise ist der Stopfen universell verwendbar.

Es ist zweckmäßig, wenn das in die Hohlwelle 9 eingreifende Außengewinde 13 der Stange 10 eine größere Steigung als das in den Stopfen 22 einzuschraubende Gewinde am Ende der Stange 10 aufweist. Auf diese Weise ziehen die Gewinde in besonders eleganter Weise die Hohlwelle an der Stirnseite des Stopfens fest.

## Patentansprüche

1. Vorrichtung für das Verschließen eines unter Betriebsdruck stehenden Rohres einer Versorgungsleitung,
bestehend aus einem mit einer axialen Gewindebohrung (23) versehenen Stopfen (22) und einem Stopfensetzgerät,
das aus einer am Rohransatz (2) einer Rohrschelle (1), die abgedichtet um das Rohr der Versorgungsleitung gelegt ist, anzubringenden, mit einem Absperrschieber (4) und einem Schleusenrohr (5) versehenen Schleuse und einer im Schleusenrohr (5) abgedichtet verschiebbaren Stange (10) aufgebaut ist, deren der Versorgungsleitung zugewandtes Ende mit einem Gewinde zur Halterung des Stopfens (22) und deren aus dem Schleusenrohr (5) herausragendes Ende mit einem Drehwerkzeug (19) versehen ist,
wobei die Stange (10) von einer Hohlwelle (9) umgeben ist, welche an den Stopfen (22) ankoppelbar ist und welche an ihrem aus dem Schleusenrohr (5) herausragenden Ende mit einem Drehwerkzeug (19) zu drehen ist,
dadurch gekennzeichnet,
daß die Hohlwelle (9) mit einem Innengewinde versehen ist, welches in ein auf der Stange (10) befindliches Außengewinde (13) eingeschraubt ist, und daß die Hohlwelle (9) mit ihrer Stirnseite am Bohrwerkzeug oder Stopfen (22) anliegt.

2. Vorrichtung nach Anspruch 1,
dadurch gekennzeichnet,
daß mindestens ein Dichtungsring (16) zwischen der Stange (10) und der Hohlwelle (9) und zwischen der Hohlwelle (9) und dem Schleusenrohr (5) angeordnet ist.

3. Vorrichtung nach Anspruch 1,
dadurch gekennzeichnet,
daß die Hohlwelle (9) an ihrer Außenseite innerhalb des Schleusenrohres (5) mit einem Anschlag (15) , vorzugsweise in Form eines Federringes, und das Schleusenrohr (5) mit einem Gegenanschlag (7) versehen ist.

4. Vorrichtung nach Anspruch 1,
dadurch gekennzeichnet,
daß die Stange (10) mit einem Anschlag, vorzugsweise in Form eines Bundringes (12) oder eines Federringes versehen ist und die Hohlwelle (9) mit einem Gegenanschlag versehen ist, der vorzugsweise durch einen Absatz (14) gebildet ist.

5. Vorrichtung nach Anspruch 1,
dadurch gekennzeichnet,
daß das Schleusenrohr (5) mit einem durch ein Ventil (18) verschlossenen Kanal (17) versehen ist.

6. Vorrichtung nach Anspruch 1,
dadurch gekennzeichnet,
daß die Hohlwelle (9) auf ihrem aus dem Schleusenrohr (5) herausstehenden Ende mit einem weiteren Anschlag (15), vorzugsweise in Form eines Federringes, versehen ist.

7. Vorrichtung nach Anspruch 1,
dadurch gekennzeichnet,
daß die Stange (10) vorzugsweise an ihrem im Schleusenrohr (5) befindlichen Ende einen bundartigen Vorsprung (12) aufweist, der das Außengewinde (13) trägt, in das das Innengewinde der Hohlwelle (9) eingeschraubt ist,
wobei vorzugsweise dieses Außengewinde (13) eine größere Steigung als das in den Stopfen (22) einzuschraubende Gewinde am Ende der Stange (10) aufweist.

8. Vorrichtung nach Anspruch 1,
dadurch gekennzeichnet,
daß der Stopfen auf seiner Umfangsfläche ein Gewinde trägt, das imstande ist, im Loch des Rohres und/oder der Rohrschelle ein Gewinde zu schneiden,
und daß er an seinem Ende mit Arbeitsmitteln zum Abdichten versehen ist.

9. Vorrichtung nach Anspruch 8,
dadurch gekennzeichnet,
daß das Gewinde an durch achsparallel oder vorzugsweise schräg auf der Umfangsfläche des Stopfens (22) angeordnete Ausnehmungen unterbrochen ist.

10. Vorrichtung nach Anspruch 8 und 9,
dadurch gekennzeichnet,
daß jeweils die Stirnfläche eines tiefer liegenden Gewindezahnes in Drehrichtung vor dem nächst höheren Gewindezahn liegt.

11. Vorrichtung nach Anspruch 8,
dadurch gekennzeichnet,
daß der Stopfen oberhalb des Gewindes mit einer Dichtung (28), vorzugsweise in Form eines Dichtringes, eines Dichtkonus und/oder eines Flansches versehen ist.

12. Vorrichtung nach Anspruch 10,
dadurch gekennzeichnet,
daß das Gewinde mehrgängig ist.

13. Vorrichtung nach Anspruch 10,
dadurch gekennzeichnet,
daß der Stopfen an seinem einen Ende konisch ist und an seinem anderen Ende mit einem Flansch versehen ist.

## Claims

1. A device for closing a pipe, subject to operating pressure, of a supply line, comprising a plug (22), provided with an axial threaded bore (23), and a plug fitting apparatus which is constructed from an air lock, which is to be applied to the socket (2) of a pipe clamp (1), applied in sealing fashion around the pipe of the supply line, and which is provided with a shut-off valve (4) and an air lock tube (5), and from a rod (10) which can be displaced in sealed fashion in the air lock tube (5) and the end of which facing towards the supply line is provided with threading for the retention of the plug (22) and the end of which projecting from the air lock tube (5) is provided with a rotating tool (19), where the rod (10) is surrounded by a hollow shaft (9) which can be coupled to the plug (22) and which is to be rotated by a rotating tool (19) at its end projecting from the air lock tube (5), characterised in that the hollow shaft (9) is provided with internal threading which is screwed into external threading (13) arranged on the rod (10), and that at its end face the hollow shaft (9) bears against the boring tool or plug (22).

2. A device as claimed in Claim 1, characterised in that at least one sealing ring (16) is arranged between the rod (10) and the hollow shaft (9) and between the hollow shaft (9) and the air lock tube (5).

3. A device as claimed in Claim 1, characterised in that the hollow shaft (9) is provided on its exterior inside the air lock tube (5) with a stop means (15), preferably in the form of a spring ring, and the air lock tube (5) is provided with a counter-stop (7).

4. A device as claimed in Claim 1, characterised in that the rod (10) is provided with a stop means, preferably in the form of a flange ring (12) or a spring ring, and the hollow shaft (9) is provided with a counter stop which preferably is formed by a step (14).

5. A device as claimed in Claim 1, characterised in that the air lock tube (5) is provided with a channel (17) closed by a valve (18).

6. A device as claimed in Claim 1, characterised in that at its end projecting from the air lock tube (5) the hollow shaft (9) is provided with a further stop means (15), preferably in the form of a spring ring.

7. A device as claimed in Claim 1, characterised in that preferably at its end located in the air lock tube (5) the rod (10) comprises a flange-like projection (12) which bears the external threading (13) into which the internal threading of the hollow shaft (9) is screwed, where preferably this external threading (13) possesses a steeper pitch than the threading at the end of the rod (10) which is to be screwed into the plug (22).

8. A device as claimed in Claim 1, characterised in that the plug is provided on its peripheral surface with threading which is capable of cutting a thread in the hole in the pipe and/or the pipe clamp, and that it is provided at its end with operating means for sealing.

9. A device as claimed in Claim 8, characterised in that the threading is interrupted by recesses disposed paraxially or preferably obliquely in the peripheral surface of the plug (22).

10. A device as claimed in Claim 8 and 9, characterised in that the respective end face of a deeper lying thread tooth is located in advance of the next higher thread tooth considered in the direction of rotation.

11. A device as claimed in Claim 8, characterised in that the plug is provided above the threading with a seal (28), preferably in the form of a sealing ring, a sealing cone and/or a flange.

12. A device as claimed in Claim 10, characterised in that the threading is multiply threaded.

13. A device as claimed in Claim 10, characterised in that at one of its ends the plug is conical and at its other end it is provided with a flange.

## Revendications

1. Dispositif pour l'obturation d'un tube, soumis à une pression de service, d'une conduite d'alimentation, se composant d'un bouchon (22) comportant un trou fileté axial (23) et d'un appareil de mise en place de bouchon, qui est constitué d'un sas, pourvu d'un poussoir d'obturation (4) et d'un tube de sas (5) et devant être installé sur une tubulure (2) d'un collier (1), qui est monté de façon étanche autour du tube de la conduite d'alimentation, ainsi que d'une tige (10) pouvant coulisser de façon étanche dans le tube de sas (5) et dont l'extrémité, dirigée vers la conduite d'alimentation, est pourvue d'un filetage pour la fixation du bouchon (22) et de son extrémité dépassant du tube de sas (5) à l'aide d'un outil d'entraînement en rotation (19), la tige (10) étant entourée par un arbre creux (9) qui peut être accouplé avec le bouchon (22) et peut être entraîné en rotation à l'aide d'un outil (19) par son extrémité dépassant du tube de sas (5),
dispositif caractérisé en ce que l'arbre creux (9) est pourvu d'un filetage intérieur qui est vissé sur un filetage extérieur (13) formé sur la tige (10) et en ce que l'arbre creux (9) s'applique par son côté frontal contre un outil de perçage ou le bouchon (22).

2. Dispositif selon la revendication 1, caractérisé en ce qu'il est prévu au moins une bague d'étanchéité (16) entre la tige (10) et l'arbre creux (9) et entre l'arbre creux (9) et le tube de sas (5).

3. Dispositif selon la revendication 1, caractérisé en ce que l'arbre creux (9) est pourvu, sur son côté extérieur et à l'intérieur du tube de sas (5), d'une butée (15), se présentant de préférence sous la forme d'une bague élastique, et le tube de sas (5) est pourvu d'une contre-butée (7).

4. Dispositif selon la revendication 1, caractérisé en ce que la tige (10) est pourvue d'une butée, se présentant de préférence sous la forme d'un collet annulaire (12) ou d'une bague élastique, et l'arbre creux (9) est pourvu d'une contre-butée, qui est constituée avantageusement par un épaulement (14).

5. Dispositif selon la revendication 1, caractérisé en ce que le tube de sas (5) est pourvu d'un canal (17) fermé par une soupape (18).

6. Dispositif selon la revendication 1, caractérisé en ce que l'arbre creux (9) est pourvu, sur son côté dépassant du tube de sas (5), d'une autre butée (15), se présentant avantageusement sous la forme d'une bague élastique.

7. Dispositif selon la revendication 1, caractérisé en ce que la tige (10) comporte, de préférence à son extrémité située dans le tube de sas (5), une saillie en forme de collet qui porte le filetage extérieur (13) sur lequel est vissé le filetage intérieur de l'arbre creux (9), ce filetage extérieur (13) ayant avantageusement un pas plus grand que celui du filetage prévu à l'extrémité de la tige (10) et vissé dans le bouchon (22).

8. Dispositif selon la revendication 1, caractérisé en ce que le bouchon comporte sur sa surface périphérique un filetage qui est en mesure d'usiner un filetage dans le trou du tube et/ou du collier tubulaire et en ce qu'il est pourvu à son extrémité de moyens servant à établir une étanchéité.

9. Dispositif selon la revendication 8, caractérisé en ce que le filetage est interrompu par des évidements formés parallèlement à l'axe ou de préférence en oblique sur la surface périphérique du bouchon (22).

10. Dispositif selon la revendication 8 et 9, caractérisé en ce que respectivement la surface frontale d'une dent inférieure du filetage est située, dans le sens de rotation, avant la dent de filetage immédiatement supérieure.

11. Dispositif selon la revendication 8, caractérisé en ce que le bouchon est pourvu, au-dessus du filetage, d'un joint d'étanchéité (28), de préférence sous la forme d'une bague d'étanchéité, d'un cône d'étanchéité et/ou d'une bride.

12. Dispositif selon la revendication 10, caractérisé en ce que le filetage est à plusieurs filets.

13. Dispositif selon la revendication 10, caractérisé en ce que le bouchon est conique à une de ses extrémités et est pourvu d'une collerette à son autre extrémité.
